# FASCICULE DE BREVET EUROPEEN

(11) **EP 2 013 037 B1**
(45) Date de publication et mention de la délivrance du brevet: **08.09.2010**
(21) Numéro de dépôt: 07726482.8
(22) Date de dépôt: 22.02.2007
(51) Int. Cl.: B60C 11/12

(54) **INCISION DE BANDE DE ROULEMENT COMPRENANT DES PARTIES DE BLOCAGE**
SPERRTEILE UMFASSENDER LAUFSTREIFENEINSCHNITT
RUNNING TREAD INCISION COMPRISING BLOCKING PARTS

(30) Priorité: 08.03.2006 FR 0602110
(43) Date de publication de la demande: 14.01.2009
(73) Titulaire: Société de Technologie Michelin, 63000 Clermont-Ferrand (FR); Michelin Recherche et Technique S.A., 1763 Granges-Paccot (CH)
(72) Inventeur: SUMI, Ryo, Dublin - California 94508 (US)
(74) Mandataire: Diernaz, Christian
(86) Numéro de dépôt international: PCT/EP2007/051724
(87) Numéro de publication internationale: WO 2007/101794

(56) Documents cités:
- WO-A-2006/013694
- JP-A- 2002 187 412
- JP-A- 2004 314 758

## Description

L'invention concerne une nouvelle géométrie d'incision formée dans une bande de roulement ainsi qu'un élément moulant destiné à mouler ce type d'incision dans un matériau élastomère pour bande de roulement du type montré par JP-A-2004-314 758.

Pour augmenter l'adhérence d'un pneumatique équipant un véhicule de tourisme, notamment sur sol enneigé et/ou sur sol verglacé, il est connu de pourvoir sa bande de roulement (c'est-à-dire la partie de ce pneumatique destinée à être en contact avec la chaussée pendant le roulage) avec ce que l'on appelle de manière générique, dans la présente description, des découpures, ces dernières étant obtenues par moulage au cours de l'opération de moulage et vulcanisation du pneumatique ou encore après la vulcanisation dudit pneumatique. Parmi les découpures, on trouve des incisions, c'est-à-dire des espaces séparant deux faces de matériau élastomère, la largeur de ces espaces étant, de façon usuelle, inférieure à 3.0 millimètres (mm) pour des pneumatiques de véhicule de tourisme ou de poids lourd. Cette largeur peut descendre jusqu'à zéro, c'est-à-dire que les faces en vis-à-vis délimitant cet espace sont en contact quasi permanent.

Par ailleurs, on distingue, parmi les découpures, des rainures qui sont des espaces entre deux faces de matériau élastomère et qui présentent des largeurs supérieures ou égales à 3.0 mm. Toutes ces découpures ont pour avantage de former des arêtes de matériau qui sont actives pendant le contact avec la chaussée. En outre, les rainures sont adaptées à une évacuation accrue d'eau tandis que les incisions sont adaptées à conférer à une bande de roulement une plus grande adhérence par la possibilité de prévoir un grand nombre d'arêtes sur une surface de roulement donnée tout en conservant une rigidité d'ensemble satisfaisante du point des autres performances.

Il a été observé qu'un phénomène de remplissage des incisions pouvait se produire avec des particules de neige ou de glace pendant le roulage, ce qui, compte tenu du très grand nombre d'incisions, les rendait moins efficaces puisque ce remplissage efface en quelque sorte les arêtes en partie ou en totalité.

Une solution à ce problème consiste à employer des rainures de largeur suffisante pour permettre l'évacuation des particules de neige en roulage, c'est-à-dire de largeur au moins égale à 3 mm. Dans ce cas, le remplissage est moins sensible puisque par effet de la force centrifuge créée par la mise en rotation du pneumatique, les particules remplissant les rainures peuvent être évacuées. En contrepartie, ces largeurs de rainures conduisent à une diminution de la rigidité de la sculpture que ce soit à l'écrasement ou bien sous efforts tangents à la surface de contact entre le pneumatique et la chaussée. Par ailleurs, le nombre d'arêtes s'en trouve réduit pour une même surface de roulement compte tenu de la largeur relativement importante des rainures employées.

Le problème résolu par l'invention s'énonce de la façon suivante : comment obtenir une sculpture pourvue d'un très grand nombre d'incisions sur sa surface de roulement tout en limitant la diminution de rigidité et tout en étant moins sensible au remplissage par des particules de neige ou de glace.

La bande de roulement selon l'invention comprend une surface de roulement destinée à être en contact avec la chaussée pendant le roulage d'un pneumatique pourvu de ladite bande, cette surface de roulement étant pourvue d'une sculpture formée par une pluralité de découpures, une pluralité d'entre elles étant des incisions. Chaque incision est délimitée par deux parois principales en vis-à-vis, chacune desdites parois étant constituée par une surface moyenne dont l'intersection avec la surface de roulement à l'état initial forme une arête. La largeur moyenne de chaque incision mesurée comme la distance moyenne entre les arêtes formée par les parois principales en vis-à-vis de ladite incision sur la surface de roulement à l'état initial est au moins égale à 1.5 mm.

En outre, chaque paroi de ces incisions comprend au moins une région destinée à coopérer avec une région sur l'autre paroi en vis-à-vis, de façon à réaliser une réduction des mouvements relatifs - par blocage mécanique - desdites parois les unes par rapport aux autres au moins dans le contact du pneumatique avec la chaussée. Le pourcentage de surface occupée par ces régions de blocage est au moins égal à 10 % et au plus égal à 60 % de la surface totale de chaque paroi à l'état initial.

Préférentiellement, ce pourcentage est supérieur à 25% et inférieur à 60%.

Dans les régions de blocage, la largeur moyenne de l'incision est appropriée pour que les parties de parois en vis-à-vis dans ces régions soient en permanence en contact ou puissent être en contact l'une avec l'autre pendant le roulage, au moins lorsque ces incisions passent dans le contact avec la chaussée. Dans ces régions de blocage, la largeur de l'incision est au plus égale à 0.6 mm et encore plus préférentiellement inférieure ou égale à 0.1 mm.

Pour permettre l'éjection des matières remplissant l'incision, il est essentiel que ces régions de blocage soient formées à l'intérieur de la bande, c'est-à-dire sous la surface de roulement de la bande à l'état neuf de façon à déboucher sur ladite surface de roulement qu'après une usure partielle de ladite bande.

Le choix des domaines de valeurs s'explique par le minimum nécessaire pour avoir un blocage mécanique appréciable (la surface est au moins égale à 10%), et par le maximum au-delà duquel le pourcentage d'incision de grande largeur (au moins égale à 1.5 mm) devient insuffisant pour avoir une éjection des matières emprisonnées dans l'incision.

Grâce aux incisions selon l'invention, l'efficacité des arêtes est maintenue même lorsque des particules de neige et/ou de glace pénètrent dans ces incisions, car ces particules peuvent être aisément éjectées grâce à la relativement grande largeur (au moins égale à 1.5 mm) des incisions près de la surface de roulement à l'état neuf. Un haut niveau de rigidité mécanique des éléments de sculpture pourvus de ces incisions est assuré par la présence des régions de blocage.

Par ailleurs, l'incision selon l'invention peut être prolongée par une partie élargie s'étendant sur toute la longueur de l'incision, ladite partie élargie ayant une largeur supérieure à la largeur maximale de l'incision. Cette partie élargie peut être de forme quelconque et notamment circulaire ou triangulaire (vue en coupe) ; elle a une largeur au moins égale à 1.5 fois la largeur maximale de l'incision sur la surface de roulement et une hauteur (mesurée dans une direction perpendiculaire à la surface de roulement) au plus égale à la moitié de la profondeur des rainures de la bande de roulement à l'état neuf.

Un perfectionnement du fonctionnement des incisions est obtenue en prévoyant que les parois en vis-à-vis font entre elles un angle moyen α (alpha) qui n'est pas nul, l'intersection desdites parois se faisant à l'intérieur de la bande de roulement (les parois font dans ce cas un angle qui va en s'ouvrant vers la surface de roulement de la bande). Préférentiellement, l'angle moyen α (alpha) est compris entre 4 degrés et 10 degrés. Par angle moyen, on entend l'angle que font entre eux les plans moyens des parois principales délimitant une incision.

Préférentiellement, les parois en vis-à-vis de ces régions de blocage mécanique sont pourvues de géométries aptes à réaliser un blocage mécanique d'une paroi par rapport à l'autre. Une manière d'y parvenir consiste à pourvoir les parois des régions étroites avec des reliefs en creux et en bosses interagissant les uns avec les autres. Une forme de réalisation consiste à former une géométrie de paroi en zigzag dans l'épaisseur de la bande de roulement. On peut également prévoir un zigzag dans une autre direction, combiné ou non au premier zigzag.

En outre, il peut être réalisé une rugosité de surface sur l'ensemble des parois des incisions. Avantageusement, cette rugosité est réalisée uniquement sur les régions de blocage. Dans ce cas, la présence d'une rugosité de surface limitée aux seules régions de blocage augmente encore plus le blocage mécanique tout en évitant de retenir les particules de neige et de glace dans les autres parties des incisions.

L'invention concerne en outre un élément moulant comprenant deux parties, une première partie étant destinée à être montée dans un moule destiné au moulage d'une bande de roulement et une seconde partie située dans le prolongement de la première partie et destinée à mouler une incision dans la bande de roulement, cette seconde partie ayant une épaisseur moyenne au moins égale à 1.5 mm, à l'exception d'au moins une région (e moindre épaisseur moyenne inférieure à 0.6 mm, cet élément moulant étant **caractérisé en ce que** le pourcentage de surface totale de région de moindre épaisseur est au moins égal à 10 % et au plus égal à 60 % de la surface totale de la seconde partie, et en ce que seule cette au moins une région de moindre épaisseur comprend une pluralité de reliefs destinés à mouler des régions de blocage mécanique sur les parois de l'incision moulée avec cet élément moulant.

De façon avantageuse, chaque région de moindre épaisseur de cet élément moulant est située à une distance d'au moins 25% de la longueur de la seconde partie de l'élément moulant, cette distance étant mesurée à partir du raccordement de la première partie (40') avec la seconde partie (40") de l'élément moulant (la longueur de la seconde partie de l'élément moulant correspond à la profondeur de l'incision moulée).

D'autres caractéristiques et avantages de l'invention ressortent de la description faite ci-après en référence aux dessins annexés qui montrent, à titre d'exemples non limitatifs, des formes de réalisation de l'objet de l'invention.

La figure 1 montre une vue partielle d'une bande de roulement à l'état initial, cette bande comprenant une pluralité d'incisions selon l'invention ;

La figure 2 montre une coupe de l'incision de la figure 1 selon un plan de coupe II-II passant par une région de blocage ;

La figure 3 montre une coupe de l'incision de la figure 1 selon un plan de coupe III-III ne passant par une région de blocage ;

Les figures 4A, 4B, montrent des vues d'une même lame destinée au moulage d'une incision selon l'invention dans une bande de roulement.

### Description des variantes préférentielles

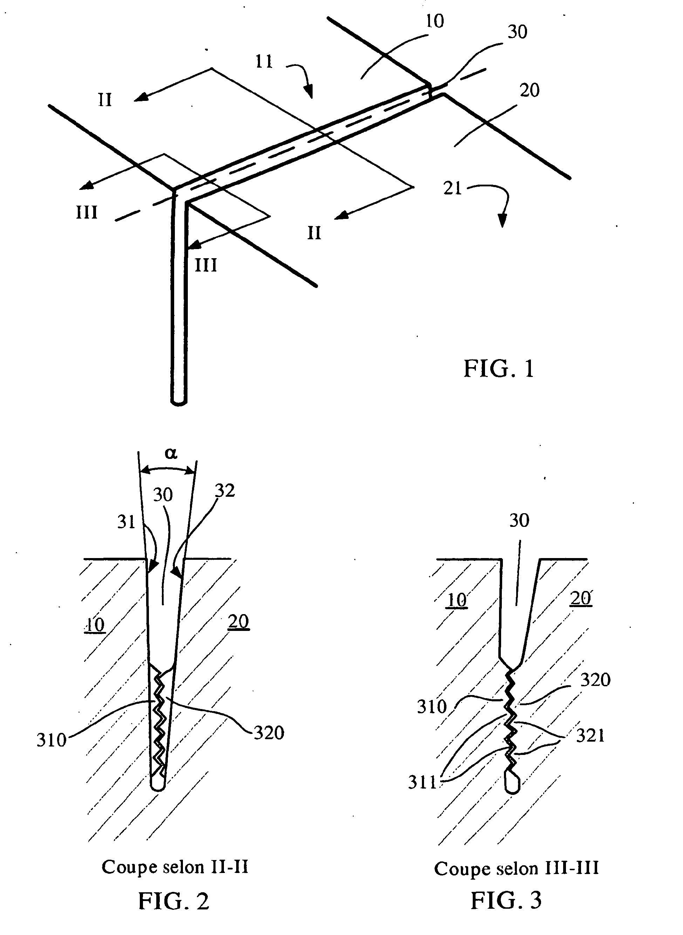

La figure 1 montre une vue partielle d'une bande de roulement de pneumatique pourvue d'une incision selon l'invention. Sur cette figure 1, deux éléments de caoutchouc 10, 20 d'une sculpture de la bande sont séparés l'un de l'autre par une incision 30 de largeur moyenne supérieure à 1.0 mm. Ces deux éléments de sculpture 10, 20 présentent des surfaces externes 11, 21 destinées à venir en contact avec la chaussée pendant le roulage ; ces surfaces 11, 21 forment des parties de la surface de roulement de la bande de roulement.

Les figures 2 et 3 montrent des coupes de cette bande de roulement réalisées selon des plans de coupe II-II et III-III perpendiculaires à la surface de roulement et repérées sur la figure 1.

Sur la figure 2, on distingue la trace des parois principales 31, 32 de l'incision 30 dans le plan de coupe, ces parois 31, 32 faisant entre elles un angle α (alpha) de 5 degrés, l'intersection virtuelle desdites traces se trouvant dans l'épaisseur de la bande. Dans la variante présentée, la largeur de l'incision est égale à 1.6 mm sur la surface de roulement à l'état neuf et diminue régulièrement dans l'épaisseur.

Par ailleurs, on distingue sur chaque paroi 31, 32 une protubérance 310, 320 réduisant localement la largeur de l'incision 30. La figure 3 montre une coupe de la même incision réalisée dans un plan III-III et sur chaque protubérance 310, 320. La combinaison des protubérances 310, 320 forme une région de blocage des mouvements relatifs d'une paroi principale 31 par rapport à l'autre paroi 32 en vis-à-vis. Le moyen de blocage consiste en la présence d'une pluralité de relief 311, 321 (creux et bosses) sur une paroi et la formation d'une partie complémentaire pour s'engrener sur la paroi en vis-à-vis de manière à réduire localement la largeur moyenne à 0.6 mm voire moins afin de permettre une coopération mécanique par engrenage des motifs de relief d'une paroi avec les motifs de relief de la paroi en vis-à-vis.

Dans le cas présent, l'incision comprend une seule région de blocage qui occupe une surface sensiblement égale à 30% de la surface totale des parois principales.

Pour obtenir un fonctionnement correct de l'incision, il est préférable de répartir les régions de blocage de manière sensiblement uniforme sur la surface des parois de l'incision (chaque région de blocage s'étendant du voisinage de la surface de roulement à l'état initial jusqu'au fond de l'incision) et en ayant une surface totale (c'est-à-dire égale à la somme des surfaces des régions de blocage) représentant entre 10 à 60 % de la surface totale.

Préférentiellement, la distance minimale séparant chaque région de blocage de la surface de roulement à l'état initial est au moins égale à 25 % de la profondeur totale de l'incision dans laquelle ladite région de blocage est formée.

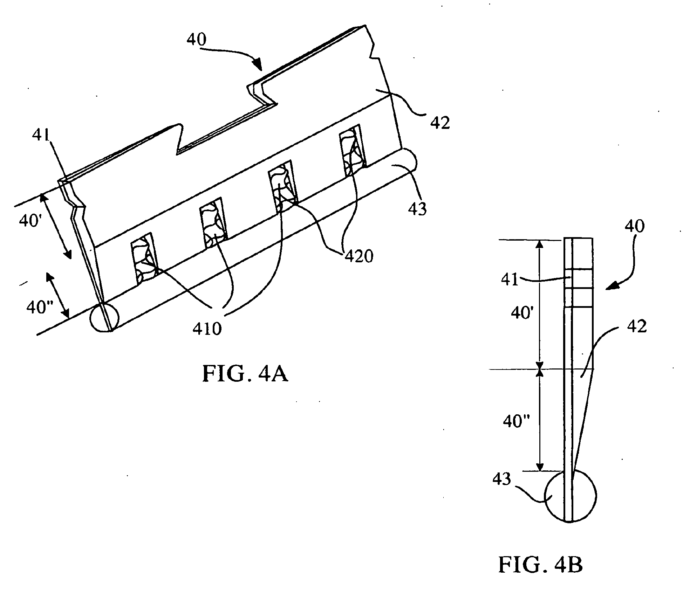

Sur les figures 4A et 4B, il est montré une lame 40 pour le moulage d'une incision selon l'invention. Sur la figure 4A, on distingue que la lame 40 est formée d'une partie 40' destinée à être monté dans un moule et dans le prolongement de cette partie 40' par une partie 40" destinée à mouler une incision dans une bande de roulement pendant le moulage et la vulcanisation de cette bande.

Par ailleurs, la partie destinée à mouler une incision est terminée par une partie élargie 43 de section circulaire. Cette dernière partie élargie 43 a une largeur maximale supérieure à la largeur maximale de la partie 40" destinée à mouler une incision.

On distingue sur la partie 40" destinée à mouler une incision, la présence d'une pluralité de parties sans blocage 400 et de parties de blocage mécanique 410, lesdites dernières parties de blocage 410 occupant une surface totale d'environ 35 % de la surface totale de paroi de la partie 40" moulant l'incision.

Dans le cas représenté avec les figures 4A et 4B, la lame 40 est formée par une première lame 41 plane d'épaisseur uniforme et égale à 0.6 mm superposée à une deuxième lame 42 ayant une première partie d'épaisseur uniforme de 1.2 mm (dans la partie 40' de la lame) et d'épaisseur uniformément variable dans la partie 40" de la lame 40. L'épaisseur minimale de la lame 42 est égale à 0.6 mm. Par ailleurs, la deuxième lame 42 est pourvue de quatre orifices 420 de forme rectangulaire ayant pour largeur 4 mm et pour longueur 5 mm (cette longueur étant prise dans la direction de la profondeur). En outre, la première lame 41 est pourvue, aux endroits correspondant aux quatre orifices de la deuxième lame 42, avec un arrangement de creux et de bosses 410 dont l'amplitude maximale est égale à la largeur maximale de la deuxième lame 42 d'épaisseur variable. Sur ces emplacements l'épaisseur est encore réduite (c'est-à-dire inférieure à 0.6 mm) par la déformation du métal au moment de l'emboutissage pour former lesdits creux et bosses.

Sur la figure 4B, on montre la lame précédente vue en coupe en dehors des régions de blocage. On peut y voir la superposition des première et deuxième lames 41, 42 terminées par la partie élargie 43 de forme circulaire (diamètre égal à 3.0 mm).

La lame 42 pourvue d'orifices 420 est de section décroissante en allant vers la partie élargie 43 : son épaisseur maximale est de 1.2 mm tandis que son épaisseur minimale est de 0.6 mm. Préférentiellement la partie élargie a une largeur au moins égale à 1.5 fois la largeur maximale de l'incision sur la surface de roulement.

En application, des lames 40 telles que décrites peuvent être disposées dans un moule de manière à ce que les incisions formées par lesdites lames aient des parois principales faisant le même angle (en valeur absolue) avec une perpendiculaire à la surface de roulement ou encore être disposées de manière à obtenir un angle d'une paroi principale qui est différent de l'angle fait par la paroi en vis-à-vis (dans ce dernier cas, la sculpture de la bande de roulement devient directionnelle).

On peut avantageusement prévoir que l'angle de la paroi dont l'arête rentre dans le contact la première forme un angle égal ou supérieur à 90 degrés avec un plan tangent à la surface de roulement sur la même arête de manière à augmenter la pression de contact sur cette arête ("leading edge"). Préférentiellement cet angle est supérieur à 90 degrés et inférieur à 110 degrés.

L'invention n'est pas limitée aux exemples décrits et représentés et diverses modifications peuvent y être apportées sans sortir de son cadre, et en particulier, l'angle des parois principales peut être égal à zéro de manière que lesdites parois soient parallèles entre elles.

## Revendications

1. Bande de roulement pour pneumatique comprenant une surface de roulement pourvue d'une sculpture comprenant une pluralité d'incisions (30), chaque incision étant délimitée par deux parois principales (31, 32) en vis-à-vis, chacune desdites parois étant constituée par une surface moyenne dont l'intersection avec la surface de roulement à l'état initial forme une arête, la largeur moyenne de chaque incision mesurée comme la distance moyenne entre les arêtes formée par les parois principales (31, 32) en vis-à-vis de ladite incision sur la surface de roulement à l'état initial est au moins égale à 1.5 mm, chacune des parois principales (31, 32) de ces incisions (30) comprenant au moins une région de blocage (310, 320), chaque région de blocage d'une paroi principale coopérant avec une région de blocage de la paroi en vis-à-vis de façon à réaliser un blocage mécanique des mouvements relatifs desdites parois au moins dans le contact du pneumatique avec la chaussée, le pourcentage de surface totale occupée par ces régions de blocage sur la surface totale de paroi étant au moins égal à 10 % et au plus égal à 60 % de la surface totale de chaque paroi à l'état initial, cette bande de roulement étant **caractérisée en ce que** la largeur moyenne de l'incision (30) dans chaque région de blocage est au plus égale à 0.6 mm.

2. Bande de roulement selon la revendication 1 **caractérisée en ce qu'**au moins une incision (30) comprend une pluralité de régions de blocage (310), ces régions étant réparties uniformément sur toute la surface des parois de ladite incision, chaque région de blocage s'étendant du voisinage de la surface de roulement à l'état initial jusque vers le fond de l'incision.

3. Bande de roulement selon l'une des revendications 1 ou 2 **caractérisée en ce** chaque région de blocage (310, 320) étant formée sous la surface de roulement, la distance minimale séparant chaque région de blocage de la surface de roulement à l'état initial est au moins égale à 25 % de la profondeur totale de l'incision dans laquelle ladite région de blocage est formée.

4. Bande de roulement selon l'une des revendications 1 à 3 **caractérisée en ce que** les parois des incisions dans les régions de blocage (310, 320) sont pourvues de rugosités favorisant la tenue mécanique desdites régions.

5. Bande de roulement selon l'une des revendications 1 à 4 **caractérisée en ce que** les parois principales en vis-à-vis font entre elles un angle moyen α (*alpha*) qui n'est pas nul, lesdites parois étant inclinées de manière à converger l'une vers l'autre en allant vers l'intérieur de la bande de roulement.

6. Bande de roulement selon la revendication 5 **caractérisée en ce que** l'angle moyen α (*alpha*) est compris entre 4° et 10°.

7. Bande de roulement selon l'une des revendications 1 à 6 **caractérisée en ce que** au moins une incision (30) est prolongée par une partie élargie s'étendant sur toute sa longueur, ladite partie élargie ayant une largeur supérieure à la largeur maximale de l'incision (30).

8. Bande de roulement selon la revendication 7 **caractérisée en ce que** chaque incision comprend une partie élargie par rapport à la largeur de l'incision sur la surface de roulement à l'état neuf, cette partie élargie ayant une largeur au moins égale à 1.5 fois ladite largeur sur la surface de roulement.

9. Bande de roulement selon la revendication 1 **caractérisée en ce que** la largeur moyenne de l'incision dans chaque région de blocage est au plus égale à 0.1 mm.

10. Élément moulant (42) comprenant deux parties, une première partie (40') étant destinée à être montée dans un moule destiné au moulage d'une bande de roulement et une seconde partie (40") située dans le prolongement de la première partie et destinée à mouler une incision dans la bande de roulement, cette seconde partie (40") ayant une épaisseur moyenne au moins égale à 1.5 mm, à l'exception d'au moins une région (410) de moindre épaisseur moyenne inférieure à 0.6 mm, cet élément moulant (42) étant **caractérisé en ce que** le pourcentage de surface totale de région de moindre épaisseur (410) est au moins égal à 10 % et au plus égal à 60 % de la surface totale de la seconde partie, et **en ce que** seule cette au moins une région de moindre épaisseur (410) comprend une pluralité de reliefs (420) destinés à mouler des régions de blocage mécanique sur les parois de l'incision moulée avec cet élément moulant.

11. Élément moulant (42) selon la revendication 10 **caractérisé en ce que** chaque région de moindre épaisseur (410) est située à une distance d'au moins 25% de la longueur de la seconde partie de l'élément moulant, cette distance étant mesurée à partir du raccordement de la première partie (40') avec la seconde partie (40") de l'élément moulant.

## Claims

1. Tyre tread comprising a tread surface provided with a tread pattern comprising a plurality of sipes (30), each sipe being delimited by two opposing main walls (31, 32), each of the said walls consisting of a mean surface of which the intersection with the tread surface in the initial condition forms an edge, the mean width of each sipe measured as the mean distance between the edges formed by the opposing main walls (31, 32) of the said sipe on the tread surface in the initial condition is at least equal to 1.5 mm, each of the main walls (31, 32) of these sipes (30) comprising at least one locking region (310, 320), each locking region of a main wall collaborating with a locking region of the wall opposite in such a way as to mechanically block relative movements of the said walls at least when the tyre is in contact with the road surface, the percentage of the total surface area occupied by these locking regions to the total surface area of the wall being at least 10% and at most 60% of the total surface area of each wall in the initial condition, this tread being **characterized in that** the mean width of the sipe (30) in each locking region being at most 0.6 mm.

2. Tread according to Claim 1, **characterized in that** at least one sipe (30) comprises a plurality of locking regions (310), these regions being uniformly distributed over the entire surface of the walls of the said sipe, each locking region extending near the tread surface in the initial condition as far as the bottom of the sipe.

3. Tread according to one of Claims 1 and 2, **characterized in that**, with each locking region (310, 320) formed under the tread surface, the minimum distance separating each locking region from the tread surface in the initial condition is at least equal to 25% of the total depth of the sipe in which the said locking region is formed.

4. Tread according to one of Claims 1 to 3, **characterized in that** the walls of the sipes in the locking regions (310, 320) have roughnesses encouraging the mechanical bonding of the said regions.

5. Tread according to one of Claims 1 to 4, **characterized in that** the opposing main walls form between them a non-zero mean angle α (alpha), the said walls being inclined in such a way that they converge towards one another in the direction towards the inside of the tread.

6. Tread according to Claim 5, **characterized in that** the mean angle α (alpha) is between 4° and 10°.

7. Tread according to one of Claims 1 to 6, **characterized in that** at least one sipe (30) is extended by a widened part extending over its entire length, the said widened part having a width greater than the maximum width of the sipe (30).

8. Tread according to Claim 7, **characterized in that** each sipe comprises a part that is widened with respect to the width of the sipe on the tread surface in the new condition, this widened part having a width at least equal to 1.5 times the said width on the tread surface.

9. Tread according to Claim 1, **characterized in that** the mean width of the sipe in each locking region is at most 0.1 mm.

10. Moulding element (42) including two parts, a first part (40') being intended to be mounted in a mould intended for the moulding of a tread and a second part (40") located in the prolongation of the first part and intended to mould an incision in the tread, this second part (40") having an average thickness at least equal to 1.5 mm, except for at least one area (410) of less average thickness lower than 0.6 mm, this moulding element (42) being **characterized in that** the percentage of total surface of area of less thickness (410) is at least equal to 10% and most equal to 60% of the total surface of the second part, and **in that** only this at least area of less thickness (410) includes a plurality of reliefs (420) intended to mould areas of mechanical blocking on the walls of the incision moulded with this moulding element.

11. Moulding element (42) according to claim 10 **characterized in that** each area of less thickness (410) is located at a distance from at least 25% of the length of the second part of the moulding element, this distance being measured starting from the connection of the first part (40') with the second part (40") of the moulding element.

## Patentansprüche

1. Laufstreifen für einen Luftreifen, der eine Lauffläche enthält, die mit einem Profil versehen ist, das mehrere Einschnitte (30) enthält, wobei jeder Einschnitt von zwei einander gegenüberliegenden Hauptwänden (31, 32) begrenzt wird, wobei jede der Wände aus einer mittleren Fläche besteht, deren Schnittstelle mit der Lauffläche im Anfangszustand eine Kante bildet, wobei die mittlere Breite jedes Einschnitts, gemessen als der mittlere Abstand zwischen den von den einander gegenüberliegenden Hauptwänden (31, 32) des Einschnitts gebildeten Kanten an der Lauffläche im Anfangszustand, mindestens gleich 1,5 mm ist, wobei jede der Hauptwände (31, 32) dieser Einschnitte (30) mindestens einen Blockierbereich (310, 320) enthält, wobei jeder Blockierbereich einer Hauptwand mit einem Blockierbereich der gegenüberliegenden Wand zusammenwirkt, um eine mechanische Blockierung der relativen Bewegungen der Wände zumindest beim Kontakt des Luftreifens mit der Straße herzustellen, wobei der Prozentsatz der Gesamtfläche, die von diesen Blockierbereichen auf der Gesamtwandfläche eingenommen wird, mindestens gleich 10 % und höchstens gleich 60 % der Gesamtfläche jeder Wand im Anfangszustand ist, wobei dieser Laufstreifen **dadurch gekennzeichnet ist, dass** die mittlere Breite des Einschnitts (30) in jedem Blockierbereich höchstens gleich 0,6 mm ist.

2. Laufstreifen nach Anspruch 1, **dadurch gekennzeichnet, dass** mindestens ein Einschnitt (30) mehrere Blockierbereiche (310) enthält, wobei diese Bereiche gleichmäßig über die ganze Fläche der Wände des Einschnitts verteilt sind, wobei jeder Blockierbereich sich von der Nähe der Lauffläche im Anfangszustand bis zum Boden des Einschnitts erstreckt.

3. Laufstreifen nach einem der Ansprüche 1 oder 2, **dadurch gekennzeichnet, dass,** da jeder Blockierbereich (310, 320) unter der Lauffläche geformt ist, der Mindestabstand, der jeden Blockierbereich von der Lauffläche im Anfangszustand trennt, mindestens gleich 25 % der Gesamttiefe des Einschnitts ist, in dem der Blockierbereich geformt ist.

4. Laufstreifen nach einem der Ansprüche 1 bis 3, **dadurch gekennzeichnet, dass** die Wände der Einschnitte in den Blockierbereichen (310, 320) mit Rauigkeiten versehen sind, die die mechanische Festigkeit der Bereiche unterstützen.

5. Laufstreifen nach einem der Ansprüche 1 bis 4, **dadurch gekennzeichnet, dass** die einander gegenüberliegenden Hauptwände zwischen sich einen mittleren Winkel α (alpha) bilden, der nicht Null ist, wobei die Wände so geneigt sind, dass sie in Richtung des Inneren des Laufstreifens zueinander konvergieren.

6. Laufstreifen nach Anspruch 5, **dadurch gekennzeichnet, dass** der mittlere Winkel α (alpha) zwischen 4° und 10° liegt.

7. Laufstreifen nach einem der Ansprüche 1 bis 6, **dadurch gekennzeichnet, dass** mindestens ein Einschnitt (30) durch einen verbreiterten Teil verlängert wird, der sich über seine ganze Länge erstreckt, wobei der verbreiterte Teil eine Breite hat, die größer ist als die maximale Breite des Einschnitts (30).

8. Laufstreifen nach Anspruch 7, **dadurch gekennzeichnet, dass** jeder Einschnitt einen bezüglich der Breite des Einschnitts an der Lauffläche im Neuzustand verbreiterten Teil enthält, wobei dieser verbreiterte Teil eine Breite von mindestens gleich 1,5 Mal die Breite an der Lauffläche hat.

9. Laufstreifen nach Anspruch 1, **dadurch gekennzeichnet, dass** die mittlere Breite des Einschnitts in jedem Blockierbereich höchstens gleich 0,1 mm ist.

10. Formgebungselement (42), das zwei Teile enthält, einen ersten Teil (40'), der dazu bestimmt ist, in ein Formwerkzeug montiert zu werden, das zum Formen eines Laufstreifens bestimmt ist, und einen zweiten Teil (40"), der sich in der Verlängerung des ersten Teils befindet und dazu bestimmt ist, einen Einschnitt im Laufstreifen zu formen, wobei dieser zweite Teil (40") eine mittlere Dicke mindestens gleich 1,5 mm hat, mit Ausnahme mindestens eines Bereichs (410) geringerer mittlerer Dicke von weniger als 0,6 mm, wobei dieses Formgebungselement (42) **dadurch gekennzeichnet ist, dass** der Prozentsatz an Gesamtfläche des Bereichs geringerer Dicke (410) mindestens gleich 10 % und höchstens gleich 60 % der Gesamtfläche des zweiten Teils ist, und dass nur dieser mindestens eine Bereich geringerer Dicke (410) mehrere Reliefs (420) enthält, die dazu bestimmt sind, mechanische Blockierbereiche auf den Wänden des Einschnitts zu formen, der mit diesem Formgebungselement geformt wird.

11. Formgebungselement (42) nach Anspruch 10, **dadurch gekennzeichnet, dass** jeder Bereich geringerer Dicke (410) sich in einem Abstand von mindestens 25 % der Länge des zweiten Teils des Formgebungselements befindet, wobei dieser Abstand ausgehend von der Verbindung des ersten Teils (40') mit dem zweiten Teil (40") des Formgebungselements gemessen wird.
